# EUROPEAN PATENT SPECIFICATION

(11) **EP 3 184 262 B1**
(45) Date of publication and mention of the grant of the patent: **19.09.2018**
(21) Application number: 16203386.4
(22) Date of filing: 12.12.2016
(51) Int. Cl.: B25J 9/00, B25J 9/04, B25J 19/00

(54) **MULTI-AXIS INDUSTRIAL ROBOT, IN PARTICULAR OF A SCARA TYPE**
MEHRACHSIGER INDUSTRIEROBOTER, INSBESONDERE EINES SCARA-TYPS
ROBOT INDUSTRIEL À AXES MULTIPLES, EN PARTICULIER DE TYPE SCARA

(30) Priority: 23.12.2015 IT UB20159345
(43) Date of publication of application: 28.06.2017
(73) Proprietor: Comau S.p.A., 10095 Grugliasco (Torino) (IT)
(72) Inventor: BORDEGNONI, Mr. Stefano, I-10095 Grugliasco (Torino) (IT); CINIELLO, Mr. Francesco, I-10095 Grugliasco (Torino) (IT)
(74) Representative: Frontoni, Stefano

(56) References cited:
- DE-U1-202011 001 965
- JP-A- H04 315 592

## Description

### TEXT OF THE DESCRIPTION

The present invention relates to a multi-axis industrial robot, in particular of a SCARA type, and specifically to the base structure via which the robot is anchored to a frame or an external supporting structure in the condition of installation in the working area assigned thereto.

In the field of industrial automation, multi-axis robots of a SCARA type are becoming extremely widespread in various fields of production thanks to their compactness and versatility, see for example JP H04 315592 A.

In the light of this increasingly widespread use, there is felt the need for operators in the field of industrial automation to be able to offer a range of solutions for this type of robots that is as broad as possible in order to satisfy all the specific requirements of the increasingly numerous applications.

In the above context, the object of the present invention is to provide a multi-axis robot, in particular of a SCARA type, that will be improved as compared to the solutions so far known, in particular in terms of versatility and ease of installation and use.

The object referred to above is achieved via a robot having the characteristics referred to in Claim 1.

The claims form an integral part of the technical teaching provided herein in relation to the invention.

Further characteristics and advantages of the invention will emerge clearly from the ensuing description with reference to the annexed drawings, which are provided purely by way of non-limiting example and in which:
- Figure 1 illustrates, in perspective view, an embodiment of the robot described herein;
- Figure 2 illustrates a detailed view of the robot of Figure 1, in which the base structure of the robot is partially disassembled to facilitate understanding of the solution;

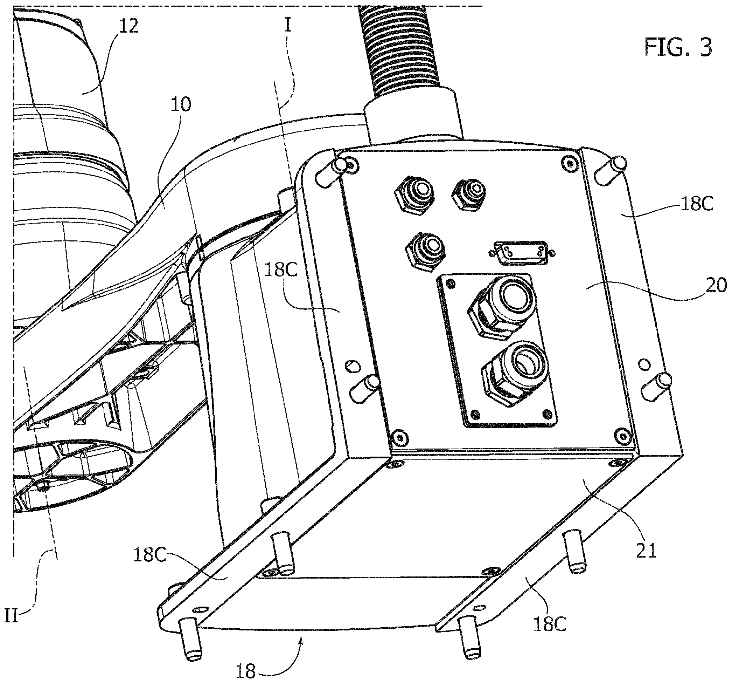

- Figure 3 illustrates the base structure of Figure 2 in an assembled condition; and
- Figures 4A-4D illustrate different configurations of installation of the robot described herein.

Illustrated in the ensuing description are various specific details aimed at providing an in-depth understanding of the embodiments. The embodiments may be obtained without one or more of the specific details, or with other methods, components, or materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

As has been said above, the present invention regards a multi-axis industrial robot, in particular a SCARA robot.

As is known in the art, the above type of robots conventionally envisages two robot arms articulated with respect to one another and an operating head carried by the second arm and mobile both in translation along and in rotation about one and the same axis that is parallel to the axis of articulation of the two arms. Likewise, the first arm is articulated to a base structure of the robot about a further axis parallel to the aforementioned two axes.

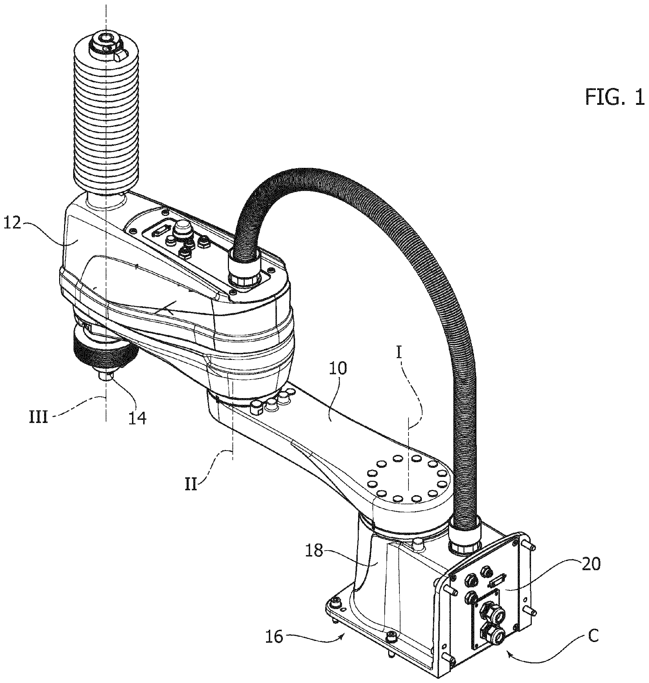

Figure 1 illustrates an embodiment of the SCARA robot described herein, in which designated by the reference numbers 10 and 12 are the first and second robot arms, respectively, designated by the reference 14 is the operating head, and designated by the reference 16 is the base structure.

With reference to the base structure 16, it normally contains the motor for actuation of the first arm 10. It should be noted that commonly it also has the dual function of carrying the connectors for connection of the equipment of the robot (i.e., power-supply cables of the motors, air-supply pipes, etc.) with the external supply systems, and of pre-arranging the means for fixing the robot to the external structure that will support it in the installed condition.

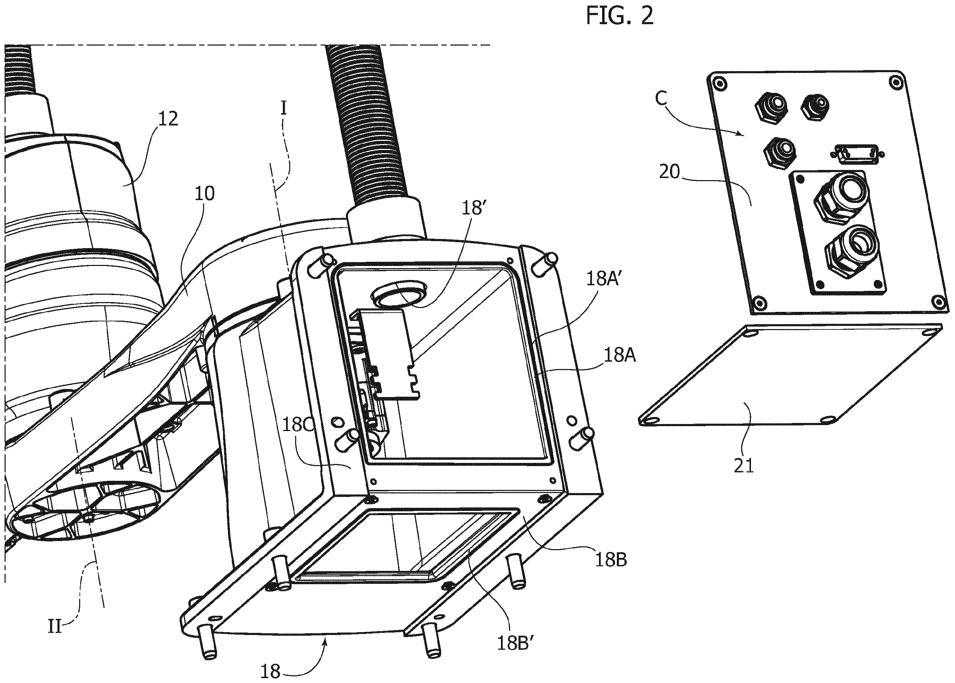

In a way in itself known, the base structure 16 has (see Figure 2) a main body 18, obtained by moulding of molten metal material, which defines inside it a cavity housed within which are the aforesaid motor and the terminal portions of the equipment of the robot. The structure 16 further comprises a plate 20 carried on which are different connectors and/or ports C - which may be not only of an electrical type, but also for example of a pneumatic type - connected to which are the aforesaid terminal portions of the equipment and which closes the cavity of the body 18 from outside. The equipment referred to, represented by a bundle of cables and/or pipes, comes out from the base structure through an opening 18' made in the top wall of the structure and connects directly to the top shell of the second arm.

In the base structure of the robot described herein, the body 18 has a rear wall 18A and a bottom wall 18B on which the inner cavity of the body defines respective openings 18A', 18B'. The plate 20 is configured for being associated indifferently to one or the other of the two walls 18A and 18B, totally covering the corresponding opening.

The characteristics indicated above afford the advantage of enabling two different modalities of connection of the equipment of the robot to the external supply systems; namely, the connection in question may be provided indifferently either on the underside of the base structure, when the plate 20 is mounted on the bottom wall 18B of the body 18, or on the rear side, when the plate 20 is instead mounted against the rear wall 18A, this according to the specific requirements of the various applications.

In various embodiments, as in the one illustrated, the base structure 16 moreover comprises a further plate 21, which, like the plate 20, can be associated to both of the two walls 18A and 18B and has only a function of covering the corresponding openings of said walls. In alternative embodiments, also the plate 21 has, instead, one or more connectors for connection of the equipment of the robot to the external supply systems.

The plates 20, 21 can be connected to the body 18 preferably via screws or bolts that engage corresponding holes made in the plate and in the body; in any case, it is possible envisage even modalities of connection of some other type, for example via slotting, gluing, etc. In this regard, it should be noted that the connection may be either of a temporary type, so as to enable variation of the arrangement of the plates even subsequently, for example at the moment when the robot is installed again, or of a permanent type - in particular for the plate 21 - so that the arrangement chosen at the moment of manufacture of the robot will remain fixed and not modifiable.

In various embodiments, as in the one illustrated, the body 18 has a pair of flanges 18C immediately adjacent to and at the opposite sides of each of the two walls 18A and 18B, which are pre-arranged for mounting and fixing of the structure 16 to an external supporting structure of the robot. In particular, the flanges 18C have a series of holes pre-arranged for fixing via screws or bolts.

In various preferred embodiments, as in the one illustrated, the walls 18A and 18B are lowered with respect to the adjacent flanges 18C so as to identify, between these flanges, corresponding seats pre-arranged for receiving indifferently each of the two plates 20, 21 and for receiving these plates in a condition where they remain within the front space occupied by the two flanges or in any case flush therewith.

The flanges 18C, and in general the body 18, can be appropriately sized so that even just one of the two pairs of flanges will alone be able to withstand the weight of the entire robot. In this regard, as has been seen above, the body 18 is preferably made of a metal material, for example a magnesium alloy.

The base structure 16 of the robot described herein can hence be mounted and fixed either at its bottom side, in the so-called floor-mounted mode, via the flanges 18C adjacent to the bottom wall 18B, or at its rear side, in the so-called wall-mounted mode, via the flanges 18C adjacent to the rear wall 18A; also in this case, the choice of one of the two fixing modes may depend upon the specific requirements of the various applications.

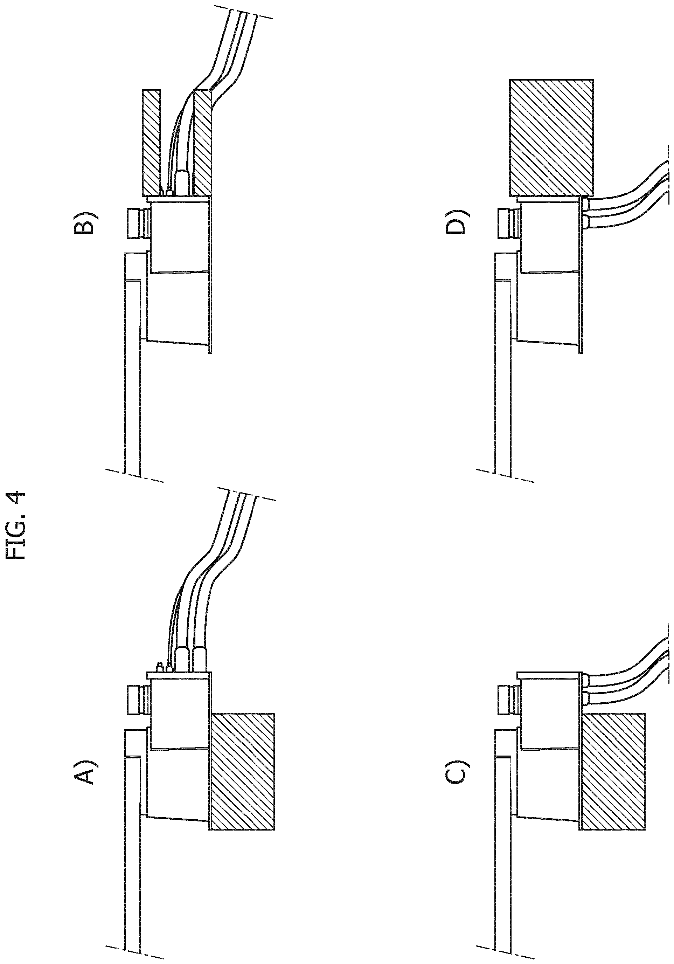

Figure 4 is a schematic illustration of the different configurations in which the robot described herein can be installed:
- Figure 4A illustrates a first configuration in which the robot is floor-mounted, and the connectors C for connection of the equipment to the external supply systems are positioned on the rear side of the structure 16;
- Figure 4B illustrates a second configuration in which the robot is wall-mounted, and the connectors C are positioned on the rear mounting side of the structure 16;
- Figure 4C illustrates a third condition in which the robot is floor-mounted, and the connectors C are positioned on the bottom mounting side of the structure 16;
- Figure 4D illustrates a fourth configuration in which the robot is wall-mounted, and the connectors C are positioned on the bottom side of the structure 16.

As has been said above, the various configurations illustrated may be adopted according to the requirements of the different applications for which the robot is to be used.

Of course, without prejudice to the principle of the invention, the details of construction and the embodiments may vary even significantly with respect to what has been illustrated herein purely by way of non-limiting example, without thereby departing from the scope of the invention, as is defined in the annexed claims. For example, in an alternative embodiment, instead of providing the further plate 21 described above, the plate 20 may present two distinct portions oriented orthogonally with respect to one another, which can be used in the same way as the two plates 20 and 21 described above.

## Claims

1. A multi-axis industrial robot, in particular of a SCARA type, comprising:
- a base structure (16);
- a first robot arm (10) pivotally connected to the base structure (16) about a first axis of rotation (I);
- a second robot arm (12) pivotally connected to said first arm about a second axis of rotation (II) parallel to said first axis; and
- an operating unit (14), which is carried by said second arm and can be driven in a first movement of translation along a third axis (III) and in a second movement of rotation about said third axis, said third axis being parallel to said first and second axes;
wherein said base structure (16) comprises:
- a main body (18) defining an inner cavity housed in which are the motor for actuation of said first arm and a series of connections of said robot; and
- a plate (20), which carries one or more connectors (C) connected to said connections, and is coupled to said main body for closing said cavity from outside;
said robot being **characterized in that**:
- said main body (18) comprises a bottom wall (18B) and a rear wall (18A) on which said inner cavity defines a first opening (18B') and a second opening (18A'), respectively; and
- said plate (20) is configured for being associated indifferently to one or the other of said bottom and rear walls, totally covering the corresponding opening (18B', 18A').

2. The robot according to Claim 1, comprising a further plate (21), which is also configured for being associated indifferently to one or the other of said bottom and rear walls, totally covering the corresponding opening (18B', 18A'),
in such a way that said plate (20) and said further plate (21) can be mounted on said main body, selectively,
in a first condition in which said plate (20) is associated to said bottom wall (18B) and covers said first opening (18B'), and said further plate (21) is associated to said rear wall (18A) and covers said second opening (18A'); or else
in a second condition in which said plate (20) is associated to said rear wall (18A) and covers said second opening (18A'), and said further plate (21) is associated to said bottom wall (18B) and covers said first opening (18B').

3. The robot according to Claim 1 or Claim 2, wherein said body (18) has in the region of each of said bottom and rear walls (18A, 18B), corresponding portions (18C) pre-arranged for mounting and fixing of said base structure (16) to an external structure.

4. The robot according to any one of the preceding claims, wherein said body (18) has in the region of each of said bottom and rear walls (18A, 18B) a pair of flanges (18C) arranged at the opposite sides of the corresponding wall and provided with fixing holes.

5. The robot according to Claim 4, wherein said walls (18A, 18B) are lowered respect to said flanges (18C) so as to identify respective seats pre-arranged for housing indifferently said plate or said further plate, in a condition where said plates (20, 21) are contained within the front space occupied by said flanges (18C) or in any case flush therewith.

6. The robot according to any one of the preceding claims, wherein, as an alternative to said plate and to said further plate both configured for being associated indifferently to one or the other of said bottom and rear walls,
said plate (20) has a first portion and a second portion that are both configured for being associated indifferently to one or the other of said bottom and rear walls totally covering the corresponding opening (18B', 18A'), wherein said connectors (C) are positioned on at least one of said first and second portions of said plate,
in such a way that said plate can be mounted on said main body, selectively,
in a first condition in which said first portion is associated to said bottom wall (18B) and covers said first opening (18B'), and said second portion is associated to said rear wall (18A) and covers said second opening (18A'); or else
in a second condition in which said first portion is associated to said rear wall (18A) and covers said second opening (18A'), and said second portion is associated to said bottom wall (18B) and covers said first opening (18B').

7. The robot according to Claim 6, wherein said connectors (C) are positioned only on one of said first and second portions of said plate.

## Patentansprüche

1. Mehrachsiger Industrie-Roboter, im Besonderen des SCARA-Typs, wobei der Roboter umfasst:
- eine Basisstruktur (16);
- einen ersten Roboterarm (10), der mit der Basisstruktur (16) so verbunden ist, dass er um eine erste Drehachse (I) verschwenkt werden kann;
- einen zweiten Roboterarm (12), der mit dem ersten Roboterarm so verbunden ist, dass er um eine zweite Drehachse (II) verschwenkt werden kann, die parallel zur ersten Achse verläuft; und
- eine Arbeitseinheit (14), die vom zweiten Arm getragen wird und in einer ersten Translationsbewegung entlang einer dritten Achse (III) sowie in einer zweiten Drehbewegung um die dritte Achse angetrieben werden kann, wobei die dritte Achse parallel zur ersten und zur zweiten Achse verläuft;
wobei die Basisstruktur (16) umfasst:
- einen Hauptkörper (18), der einen inneren Hohlraum festlegt, in dem der Motor für die Betätigung des ersten Arms sowie eine Reihe von Verbindungen für den Roboter aufgenommen werden; und
- eine Platte (20), die einen oder mehrere Anschlüsse (C) trägt, die mit den Verbindungen verbunden sind, wobei die Platte mit dem Hauptkörper gekuppelt ist, um den Hohlraum von außen zu verschließen;
wobei der Roboter **dadurch gekennzeichnet ist, dass**:
- der Hauptkörper (18) eine Bodenwand (18B) sowie eine Rückwand (18A) umfasst, auf denen der innere Hohlraum eine erste Öffnung (18B') bzw. eine zweite Öffnung (18A') festlegt; und
- die zweite Platte (20) so konfiguriert ist, dass sie gleichermaßen sowohl der Bodenwand als auch der Rückwand zugeordnet werden kann, um die entsprechende Öffnung (18B', 18A') vollständig abzudecken.

2. Roboter gemäß Anspruch 1, wobei der Roboter eine weitere Platte (21) umfasst, die ebenfalls so konfiguriert ist, dass sie gleichermaßen sowohl der Bodenwand als auch der Rückwand zugeordnet werden kann, um die entsprechende Öffnung (18B', 18A') vollständig abzudecken,
so dass die Platte (20) und die weitere Platte (21) wahlweise auf dem Hauptkörper befestigt werden können, und zwar:
in einem ersten Zustand, in dem die Platte (20) der Bodenwand (18B) zugeordnet ist und die erste Öffnung (18B') abdeckt und die weitere Platte (21) der Rückwand (18A) zugeordnet ist und die zweite Öffnung (18A') abdeckt; oder andernfalls
in einem zweiten Zustand, in dem die Platte (20) der Rückwand (18A) zugeordnet ist und die zweite Öffnung (18A') abdeckt und die weitere Platte (21) der Bodenwand (18B) zugeordnet ist und die erste Öffnung (18B') abdeckt.

3. Roboter gemäß Anspruch 1 oder Anspruch 2, wobei der Körper (18) sowohl im Bereich der Bodenwand als auch der Rückwand (18A, 18B) entsprechende Bereiche (18C) besitzt, die vorangeordnet sind, um die Basisstruktur (16) an einer externen Struktur zu montieren und zu fixieren.

4. Roboter gemäß irgendeinem der bisherigen Ansprüche, wobei der Körper (18) sowohl im Bereich der Bodenwand als auch der Rückwand (18A, 18B) ein Paar von Flanschen (18C) besitzt, die an gegenüberliegenden Seiten der entsprechenden Wand angeordnet und mit Befestigungsöffnungen versehen sind.

5. Roboter gemäß Anspruch 4, wobei die Wände (18A, 18B) im Hinblick auf die Flansche (18C) so abgesenkt sind, dass sie entsprechende Sitze bestimmen, die vorangeordnet sind, um gleichermaßen sowohl die Platte oder die weitere Platte in einem Zustand aufzunehmen, in dem die Platten (20, 21) innerhalb des vorderen Raums enthalten sind, den die Flansche (18C) einnehmen, oder allenfalls mit ihm in einer Ebene liegen.

6. Roboter gemäß irgendeinem der bisherigen Ansprüche, wobei als Alternative zur Platte als auch zur weiteren Platte beide Platten so konfiguriert sind, dass sie gleichermaßen sowohl der Bodenwand als auch der Rückwand zugeordnet werden können,
wobei die Platte (20) einen ersten Bereich sowie einen zweiten Bereich besitzt, die beide so konfiguriert sind, dass sie gleichermaßen sowohl der Bodenwand als auch der Rückwand zugeordnet werden können, um die entsprechende Öffnung (18B', 18A') vollständig abzudecken, wobei die Anschlüsse (C) auf zumindest einem Bereich des ersten und des zweiten Bereichs so positioniert sind,
dass die erste Platte wahlweise auf dem Hauptkörper positioniert werden kann und zwar:
in einem ersten Zustand, in dem der erste Bereich der Bodenwand (18B) zugeordnet ist und die erste Öffnung (18B') abdeckt und der zweite Bereich der Rückwand (18A) zugeordnet ist und die zweite Öffnung (18A') abdeckt; oder andernfalls
in einem zweiten Zustand, in dem der erste Bereich der Rückwand (18A) zugeordnet ist und die zweite Öffnung (18A') abdeckt und der zweite Bereich der Bodenwand (18B) zugeordnet ist und die erste Öffnung (18B') abdeckt.

7. Roboter gemäß Anspruch 6, wobei die Anschlüsse (C) nur auf einer Platte der ersten und zweiten Platte positioniert sind.

## Revendications

1. Robot industriel à plusieurs axes, notamment du type SCARA, comprenant :
- une structure de base (16) ;
- un premier bras de robot (10) relié de manière pivotante à la structure de base (16) autour d'un premier axe de rotation (I) ;
- un deuxième bras de robot (12) relié de manière pivotante audit premier bras autour d'un deuxième axe de rotation (II) parallèle audit premier axe ; et
- une unité d'actionnement (14), qui est portée par ledit deuxième bras et peut être entraînée dans un premier mouvement de translation le long d'un troisième axe (III) et dans un deuxième mouvement de rotation autour dudit troisième axe, ledit troisième axe étant parallèle auxdits premier et deuxième axes ;
dans lequel ladite structure de base (16) comprend :
- un corps principal (18) définissant une cavité interne dans laquelle le moteur d'actionnement dudit premier bras et une série de liaisons dudit robot sont reçus ; et
- une plaque (20), qui porte un ou plusieurs connecteur(s) (C) relié(s) auxdites liaisons, et est couplée audit corps principal pour fermer ladite cavité depuis l'extérieur ;
ledit robot étant **caractérisé en ce que** :
- ledit corps principal (18) comprend une paroi inférieure (18B) et une paroi arrière (18A) sur lesquelles ladite cavité interne définit une première ouverture (18B') et une deuxième ouverture (18A'), respectivement ; et
- ladite plaque (20) est configurée pour être associée indifféremment à l'une ou l'autre desdites parois inférieure et arrière, couvrant totalement l'ouverture correspondante (18B', 18A').

2. Robot selon la revendication 1, comprenant une plaque supplémentaire (21), qui est également configurée pour être associée indifféremment à l'une ou à l'autre desdites parois inférieure et arrière, couvrant totalement l'ouverture correspondante (18B', 18A'),
de manière à ce que ladite plaque (20) et ladite plaque supplémentaire (21) puissent être montées sélectivement sur ledit corps principal,
dans une première condition dans laquelle ladite plaque (20) est associée à ladite paroi inférieure (18B) et couvre ladite première ouverture (18B'), et ladite plaque supplémentaire (21) est associée à ladite paroi arrière (18A) et couvre ladite deuxième ouverture (18A') ; ou encore
dans une deuxième condition dans laquelle ladite plaque (20) est associée à ladite paroi arrière (18A) et couvre ladite deuxième ouverture (18A'), et ladite plaque supplémentaire (21) est associée à ladite paroi inférieure (18B) et couvre ladite première ouverture (18B')

3. Robot selon la revendication 1 ou 2, dans lequel ledit corps (18) a dans la région de chacune desdites parois inférieure et arrière (18A, 18B), des parties correspondantes (18C) pré-agencées pour le montage et la fixation de ladite structure de base (16) sur une structure externe.

4. Robot selon l'une quelconque des revendications précédentes, dans lequel ledit corps (18) a dans la région de chacune desdites parois inférieure et arrière (18A, 18B), une paire de brides (18C) agencées au niveau des côtés opposés de la paroi correspondante et dotées de trous de fixation.

5. Robot selon la revendication 4, dans lequel lesdites parois (18A, 18B) sont abaissées par rapport auxdites brides (18C) de manière à identifier des sièges respectifs pré-arrangés pour recevoir indifféremment ladite plaque ou ladite plaque supplémentaire, dans un état où lesdites plaques (20, 21) sont contenues dans l'espace avant occupé par lesdites brides (18C) ou, dans tous les cas, en affleurement avec celles-ci.

6. Robot selon l'une quelconque des revendications précédentes, dans lequel, à titre d'alternative à ladite plaque et à ladite plaque supplémentaire toutes deux configurées pour être associées indifféremment à l'une ou l'autre desdites parois inférieure et arrière,
ladite plaque (20) a une première partie et une deuxième partie qui sont toutes deux configurées pour être associées indifféremment à l'une ou à l'autre desdites parois inférieure et arrière couvrant totalement l'ouverture correspondante (18B', 18A'), où lesdits connecteurs (C) sont positionnés sur au moins l'une desdites première et deuxième parties de ladite plaque,
de sorte que ladite plaque puisse être montée sélectivement sur ledit corps principal,
dans une première condition dans laquelle ladite première partie est associée à ladite paroi inférieure (18B) et couvre ladite première ouverture (18B'), et ladite deuxième partie est associée à ladite paroi arrière (18A) et couvre ladite deuxième ouverture (18A') ; ou encore
dans une deuxième condition dans laquelle ladite première partie est associée à ladite paroi arrière (18A) et couvre ladite deuxième ouverture (18A'), et ladite deuxième partie est associée à ladite paroi inférieure (18B) et couvre ladite première ouverture (18B').

7. Robot selon la revendication 6, dans lequel lesdits connecteurs (C) sont positionnés uniquement sur l'une desdites première et deuxième parties de ladite plaque.
